(19) Europäisches Patentamt
European Patent Office
Office européen des brevets

(11) **EP 3 296 720 A1**

(12) **EUROPÄISCHE PATENTANMELDUNG**

(43) Veröffentlichungstag:
**21.03.2018 Patentblatt 2018/12**

(51) Int Cl.:
***G01N 21/31*** (2006.01)     ***G01N 33/49*** (2006.01)

(21) Anmeldenummer: **16188799.7**

(22) Anmeldetag: **14.09.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Healthcare Diagnostics Products GmbH**
**35041 Marburg (DE)**

(72) Erfinder:
• **Patzke, Juergen**
**35043 Marburg (DE)**
• **Zander, Norbert**
**35039 Marburg (DE)**

(54) **VERFAHREN UND SYSTEM ZUR ZUORDNUNG EINER KÖRPERFLÜSSIGKEITSPROBE ZU EINER KÖRPERFLÜSSIGKEITSPROBENKLASSE**

(57)    Die Erfindung betrifft ein Verfahren zur Zuordnung einer Körperflüssigkeitsprobe zu einer Körperflüssigkeitsprobenklasse aus der Gruppe Citrat-Plasma (PAP), lipämisches Plasma oder Serum (T), plättchenreiches Plasma oder Serum (P), EDTA-Plasma (E), Serum (S), Plasma oder Serum mit Bilirubin (B), und Plasma oder Serum mit Hämoglobin (H) und umfasst das Durchstrahlen der Körperflüssigkeitsprobe mit Licht bei einer Vielzahl von Wellenlängen und Messung einer Vielzahl von Absorptionen der Körperflüssigkeitsprobe bei der Vielzahl von Wellenlängen.

FIG 1

EP 3 296 720 A1

**Beschreibung**

Die vorliegende Erfindung bezieht sich auf ein Verfahren und ein System zur Zuordnung einer Körperflüssigkeitsprobe zu einer Körperflüssigkeitsprobenklasse, insbesondere einer Körperflüssigkeitsprobenklasse aus der Gruppe Citrat-Plasma, lipämisches Plasma oder Serum, plättchenreiches Plasma oder Serum, EDTA-Plasma, Serum, Plasma oder Serum mit Bilirubin, und Plasma oder Serum mit Hämoglobin.

Zahlreiche Nachweis- und Analyseverfahren zur Bestimmung physiologischer Parameter in Körperflüssigkeitsproben beruhen auf optischen, insbesondere photometrischen, Messprinzipien. Optische, insbesondere photometrische, Verfahren ermöglichen den qualitativen und quantitativen Nachweis von Analyten in flüssigen Proben. Die Bestimmung klinisch relevanter Parameter, wie zum Beispiel der Konzentration oder der Aktivität eines Analyten erfolgt vielfach, indem ein Aliquot einer Körperflüssigkeit eines Patienten mit einem oder mehreren Testreagenzien in vitro vermischt wird, wodurch eine Reaktion, beispielsweise eine chemische oder biochemische Reaktion oder eine Agglutination von Partikeln, in Gang gesetzt wird, die eine messbare Veränderung einer optischen Eigenschaft des Testansatzes bewirkt. Eins solche Veränderung könnte zum Beispiel jeweils eine Zu- oder Abnahme der Absorption (Turbidimetrie), der Lichtstreuung (Nephelometrie), der Intensität der messbaren Fluoreszenz oder der Intensität der messbaren Chemilumineszenz sein. Die Photometrie untersucht und nutzt die Schwächung oder die Verstärkung eines Lichtstroms beim Durchtritt durch ein absorbierendes und/oder streuendes Medium. Je nach Art der ausgelösten Reaktion kommen unterschiedliche photometrische Messverfahren zum Einsatz, die die Messung eines trüben flüssigen Testansatzes ermöglichen.

Hierzu können turbidimetrische Verfahren eingesetzt werden, bei denen die Trübung beziehungsweise die optische Dichte einer Lösung oder Suspension anhand der Lichtschwächung oder Verstärkung des Lichtdurchgangs eines direkt durch die Suspension hindurch tretenden Lichtstrahls gemessen wird.

Die Intensität des Lichtstrahls nimmt beim Durchtritt durch eine Messzelle beziehungsweise Küvette, die eine flüssige Probe enthält, ab. Die Verluste können durch Interaktionen des Lichtstrahls mit der in der Messzelle befindlichen Probe, beispielsweise durch Absorptions-, Diffraktions-, Streuungs- und/oder Reflexionseffekte beeinflusst werden. Im Allgemeinen können Diffraktions-, Beugungs- und Reflexionseffekte vernachlässigt beziehungsweise durch Referenzmessungen ausgeglichen werden, so dass hauptsächlich die Absorption zur Schwächung des Lichtstrahls beiträgt. Bei Testen zur Bestimmung von Analyten kann die zu messende Reaktion entweder die Absorption verstärken oder verringern.

Photometrische Konzentrationsbestimmungen beruhen daher auf einer gesetzmäßigen Abhängigkeit der Extinktion beziehungsweise Absorption von der Konzentration der gelösten Stoffe und der Schichtdicke der Messzelle bei einer bestimmten Wellenlänge des eingestrahlten Lichts. Diesen Zusammenhang beschreibt das Lambert-Beer-Bou-guer-Gesetz:

$$E(\lambda) = -\log(I/I_0) = \varepsilon(\lambda) \cdot c \cdot d \qquad\qquad (1)$$

wobei $E(\lambda)$ die von der Wellenlänge $\lambda$ des Lichtstrahls abhängige Extinktion, $I$ die Lichtintensität nach Durchtritt durch die Probe, $I_0$ die Lichtintensität vor Durchtritt durch die Probe, $\varepsilon(\lambda)$ der wellenlängenabhängige molare Extinktionskoef-fizient eines durchstrahlten Stoffes, $c$ die molare Konzentration des durchstrahlten Stoffes und $d$ die durch den Lichtstrahl durchstrahlte Schichtdicke, beispielsweise der Messzelle ist.

Anhand der Extinktion $E(\lambda)$ einer Probe lässt sich die Konzentration einer Substanz in einer Lösung ermitteln. Dazu ist es erforderlich, dass zuvor die Extinktion mindestens einer Standardlösung bekannter Konzentration bestimmt wurde. Da sich die Extinktion proportional zur Konzentration verhält, kann mittels Kalibration durch Extinktionsmessungen mehrerer Standardlösungen bekannter Konzentrationen die Konzentration einer gelösten Substanz ermittelt werden.

Die Extinktion einer Probe hängt jedoch nicht nur von der Konzentration der zu bestimmenden Substanz selbst ab, sondern auch von der Art der Probenmatrix. Die Extinktionen verschiedener Substanzen verhalten sich in einem Gemisch additiv, sofern die Substanzen nicht untereinander wechselwirken. Körperflüssigkeiten, wie beispielsweise Blutplasma oder Blutserum sind jeweils komplexe Gemische und enthalten neben dem zu bestimmenden Analyten eine Vielzahl weiterer Substanzen, die die Gesamtabsorption der Probe beeinflussen.

Körperflüssigkeitsproben können in Einzelfällen auch abnormal hohe Konzentrationen einer oder mehrerer endogener, also körpereigener Substanzen enthalten, die sich bei Überschreitung einer tolerablen Konzentration in optischen, insbesondere photometrischen, Detektionsverfahren als störend erweisen und sich zu einem systematischen Fehler auswirken können. Auch exogene Substanzen wie zum Beispiel Fettemulsionen, die bei künstlicher Ernährung eingesetzt werden, können stören.

Probleme bereiten bekanntermaßen hämolytische, ikterische und/oder lipämische Serum- oder Plasmaproben, die über abnormal hohe Hämoglobin-, Bilirubin- und/oder Lipid-Konzentrationen verfügen. Abnormal hohe Konzentrationen dieser interferierenden Substanzen können durch einen pathologischen Zustand des Patienten oder aber durch eine unsachgemäße Probengewinnung oder -lagerung verursacht werden. Werden solche Proben einem photometrischen Verfahren unterworfen, das der Bestimmung eines analytischen, diagnostisch relevanten Parameters dient, besteht die Gefahr einer Fehlbestimmung die gegebenenfalls eine Fehldiagnose und schlimmstenfalls eine Fehlbehandlung des Patienten zur Folge haben kann. Die präanalytische Identifikation hämolytischer, ikterischer sowie lipämischer Proben ist also zur Vermeidung von fehlerhaften Analyseergebnissen von besonderer Wichtigkeit. Ähnliches gilt für Proben mit erhöhtem Thrombozytengehalt.

Darüber hinaus können erhöhte Hämoglobin-, Bilirubin-, Triglyzerid- und Plättchengehalte diagnostische Teste auch über nicht-optische, wie zum Beispiel biochemische, Mechanismen stören.

Weiter bereitet das Verwechseln von Proben, die unterschiedlichen Probentypen angehören, häufig Probleme. Zu den besonders häufig miteinander verwechselten Probentypen gehören Citrat-Plasma, EDTA-Plasma, EDTA-Serum sowie plättchenreiches Plasma. Fehlerhafte Ergebnisse von Labortests und darauf fußende Fehldiagnosen mit teilweise sehr nachteiligen und weitreichenden Folgen für den Gesundheitszustand und die Lebenserwartung der betroffenen Patienten lassen sich relativ häufig auf das Verwechseln von Proben verschiedener Körperflüssigkeitsprobenklassen zurückführen.

Es besteht daher ein dringender Bedarf an Verfahren zur Zuordnung einer Körperflüssigkeitsprobe zu bestimmten Probenklassen von Körperflüssigkeitsproben.

In der EP 2549264 A1 ist ein Verfahren zur Bestimmung von Bilirubin, Hämoglobin und Lipiden in Plasma- oder Serumproben beschrieben.

Die bisher bekannten Verfahren sind nicht optimal bezüglich der Differenzierung von Lipämie, Bilirubin oder Hämoglobin-Interferenzen. Eine Verwechslung des Probentyps, beispielsweise EDTA-Plasma, Serum oder plättchenreiches Plasma, wird nicht erkannt.

Der vorliegenden Erfindung liegt demnach die Aufgabe zugrunde, ein Verfahren zur spektrophotometrischen Zuordnung einer Körperflüssigkeitsprobe zu bestimmten Probentypen von Körperflüssigkeitsproben zur Verfügung zu stellen.

**Diese Aufgabe wird durch das erfindungsgemäße Verfahren gelöst.**

Eine vorteilhafte Ausführungsform der vorliegenden Erfindung besteht in einem Verfahren zur Zuordnung einer Körperflüssigkeitsprobe zu einer Körperflüssigkeitsprobenklasse aus der Gruppe Citrat-Plasma (PAP), lipämisches Plasma oder Serum (T), plättchenreiches Plasma oder Serum (P), EDTA-Plasma (E), Serum (S), Plasma oder Serum mit Bilirubin (B), und Plasma oder Serum mit Hämoglobin (H), mit den Schritten:

a) Durchstrahlen der Körperflüssigkeitsprobe mit Licht bei einer Vielzahl von Wellenlängen und

b) Messung einer Vielzahl von Absorptionen der Körperflüssigkeitsprobe bei der Vielzahl von Wellenlängen; gekennzeichnet durch die Schritte:

c) Messung einer ersten Absorption A1 der Körperflüssigkeitsprobe bei einer ersten Wellenlänge, die im Bereich zwischen 610 nm und 930 nm liegt,

d) Messung einer zweiten Absorption A2 der Körperflüssigkeitsprobe bei einer zweiten Wellenlänge, die im Bereich zwischen 420 nm und 480 nm liegt,

e) Messung einer dritten Absorption A3 der Körperflüssigkeitsprobe bei einer dritten Wellenlänge, die im Bereich zwischen 350 nm und 410 nm liegt,

f) Messung einer vierten Absorption A4 der Körperflüssigkeitsprobe bei einer vierten Wellenlänge, die im Bereich zwischen 390 nm und 430 nm liegt,

g) Messung einer fünften Absorption A5 der Körperflüssigkeitsprobe bei einer fünften Wellenlänge, die im Bereich zwischen 445nm und 485 nm liegt,

h) Messung einer sechsten Absorption A6 der Körperflüssigkeitsprobe bei einer sechsten Wellenlänge, die im Bereich zwischen 320 nm und 400 nm liegt,

i) Messung einer siebten Absorption A7 der Körperflüssigkeitsprobe bei einer siebten Wellenlänge, die im Bereich zwischen 350 nm und 650 nm liegt,

j) Vergleich der ersten Absorption A1 mit einem vorbestimmten ersten Grenzwert G1 der Absorption,

k) Vergleich der zweiten Absorption A2 mit einem vorbestimmten zweiten Grenzwert G2 der Absorption,

l) Vergleich der dritten Absorption A3 mit einem vorbestimmten dritten Grenzwert G3 der Absorption,

m) Vergleich der vierten Absorption A4 mit einem vorbestimmten vierten Grenzwert G4 der Absorption,

n) Bildung eines ersten Verhältnisses der vierten Absorption A4 und der fünften Absorption A5 und Vergleich des ersten Verhältnisses mit einem vorbestimmten fünften Grenzwert G5 des Verhältnisses der Absorptionen,

o) Bildung eines von der ersten Absorption A1 abhängigen sechsten Grenzwerts G6 der Absorption und Vergleich der sechsten Absorption A6 mit dem sechsten Grenzwert G6 der Absorption,

p) Bildung eines von der ersten Absorption A1 abhängigen siebten Grenzwerts G7 der Absorption und Vergleich der sechsten Absorption A6 mit dem siebten Grenzwert G7 der Absorption,

q) Bildung eines von der siebten Absorption A7 abhängigen achten Grenzwerts G8 der Absorption und Vergleich der fünften Absorption A5 mit dem achten Grenzwert G8 der Absorption,

r) Zuordnung

der Körperflüssigkeitsprobe zu der Körperflüssigkeitsprobenklasse Citrat-Plasma (PAP), falls A1 kleiner G1 und A2 kleiner G2 und A3 kleiner G3 und A4 kleiner G4, oder

s) Zuordnung der Körperflüssigkeitsprobe zu der Körperflüssigkeitsprobenklasse EDTA-Plasma (E), falls A1 kleiner G1 und A2 kleiner G2 und A3 kleiner G3 und A4 größer G4 und das erste Verhältnis von A4 und A5 kleiner G5, oder

t) Zuordnung der Körperflüssigkeitsprobe zu der Körperflüssigkeitsprobenklasse Serum (S), falls A1 kleiner G1 und A2 kleiner G2 und A3 kleiner G3 und A4 größer G4 und das erste Verhältnis von A4 und A5 größer G5, oder

u) Zuordnung der Körperflüssigkeitsprobe zu der Körperflüssigkeitsprobenklasse plättchenreiches Plasma oder Serum (P), falls A1 größer G1 und A6 kleiner G6 und A6 kleiner G7, oder

v) Zuordnung der Körperflüssigkeitsprobe zu der Körperflüssigkeitsprobenklasse lipämisches Plasma oder Serum (T), falls A1 größer G1 und A6 kleiner G6 und A6 größer G7, oder

w) Zuordnung der Körperflüssigkeitsprobe zu der Körperflüssigkeitsprobenklasse Plasma oder Serum mit Hämoglobin (H), falls A1 größer G1 und A6 größer G6 und A5 kleiner G8, oder falls A1 kleiner G1 und A2 größer G2 und A5 kleiner G8, oder falls A1 kleiner G1 und A3 größer G3 und A5 kleiner G8, oder falls A1 kleiner G1 und A2 größer G2 und A3 größer G3 und A5 kleiner G8, oder

x) Zuordnung der Körperflüssigkeitsprobe zu der Körperflüssigkeitsprobenklasse Plasma oder Serum mit Bilirubin (B), falls A1 größer G1 und A6 größer G6 und A5 größer G8 ist, oder falls A1 kleiner G1 und A2 größer G2 und A5 größer G8, oder falls A1 kleiner G1 und A3 größer G3 und A5 größer G8, oder falls A1 kleiner G1 und A2 größer G2 und A3 größer G3 und A5 größer G8,

wobei die erste, zweite, dritte und vierte Wellenlänge voneinander verschieden sind.

Dieses Vorgehen hat den Vorteil, dass eine verlässliche Zuordnung einer Körperflüssigkeitsprobe zu bestimmten Probentypen von Körperflüssigkeitsproben ermöglicht wird.

In weiterer vorteilhafter Ausführung des erfindungsgemäßen Verfahrens sind die zweite und die fünfte, die dritte und die sechste sowie die vierte und die siebte Wellenlänge gleich. Dies hat den Vorteil, dass lediglich vier verschiedene Wellenlängen für die Zuordnung einer Körperflüssigkeitsprobe zu bestimmten Probentypen von Körperflüssigkeitsproben benötigt werden. Dadurch kann der Aufbau der für die Durchführung eines erfindungsgemäßen Verfahrens benötigen Apparatur vergleichsweise vereinfacht und verkleinert werden.

In weiterer vorteilhafter Ausführung des erfindungsgemäßen Verfahrens beträgt die erste Wellenlänge 645 nm, die zweite Wellenlänge 470 nm, die dritte Wellenlänge 365 nm, die vierte Wellenlänge 415 nm, die fünfte Wellenlänge 470 nm, die sechste Wellenlänge 365 nm und/oder die siebte Wellenlänge 415 nm.

In weiterer vorteilhafter Ausführung des erfindungsgemäßen Verfahrens beträgt der erste Grenzwert der Absorption G1 0,23 A, der zweite Grenzwert der Absorption G2 1,4 A, der dritte Grenzwert der Absorption G3 1,2 A, der vierte Grenzwert der Absorption G4 1,1 A, der fünfte Grenzwert des Verhältnisses der Absorptionen G5 1,2 A, der sechste Grenzwert der Absorption G6 $0{,}8935 \ln(A1) + 2{,}2804$ A, der siebte Grenzwert der Absorption G7 $-0{,}1271 (A1^2) + 1{,}0857 \, A1 + 1{,}0244$ A und/oder der achte Grenzwert der Absorption G8 $0{,}82 \, A7 + 0{,}13$ A.

In weiterer vorteilhafter Ausführung des erfindungsgemäßen Verfahrens liegt die siebte Wellenlänge im Bereich zwischen 460 nm und 650 nm.

In weiterer vorteilhafter Ausführung des erfindungsgemäßen Verfahrens sind die erste, zweite, dritte, vierte, fünfte, sechste und siebte Wellenlänge voneinander verschieden. Dies hat den Vorteil, dass eine erhöhte Sensitivität und Spezifizität bei der Zuordnung einer Körperflüssigkeitsprobe zu bestimmten Probentypen von Körperflüssigkeitsproben erreicht werden kann. So kann die Zuordnung einer Körperflüssigkeitsprobe zu bestimmten Probentypen von Körperflüssigkeitsproben noch zuverlässiger erreicht werden als beispielsweise bei der Verwendung von lediglich vier verschiedenen Wellenlängen.

In weiterer vorteilhafter Ausführung des erfindungsgemäßen Verfahrens beträgt die erste Wellenlänge 850 nm, die zweite Wellenlänge 450 nm, die dritte Wellenlänge 380 nm, die vierte Wellenlänge 410 nm, die fünfte Wellenlänge 465 nm, die sechste Wellenlänge 340 nm und/oder die siebte Wellenlänge 550 nm. Dies hat den Vorteil, dass eine erhöhte Sensitivität und Spezifizität bei der Zuordnung einer Körperflüssigkeitsprobe zu bestimmten Probentypen von Körperflüssigkeitsproben erreicht werden kann. In weiterer vorteilhafter Ausführung des erfindungsgemäßen Verfahrens beträgt der erste Grenzwert der Absorption G1 0,15 A, der zweite Grenzwert der Absorption G2 1,4 A, der dritte Grenzwert der Absorption G3 1,2 A, der vierte Grenzwert der Absorption G4 1,1 A, der fünfte Grenzwert des Verhältnisses der Absorptionen G5 1,1, der sechste Grenzwert der Absorption G6 $0{,}7016 \ln(A1) + 2{,}7$ A, der siebte Grenzwert der Absorption G7 $0{,}5908 \ln(A1) + 2{,}3509$ A der achte Grenzwert der Absorption G8 $0{,}96 \, A7 + 1{,}1$ A.

Die Absorption kann in der Einheit A angegeben werden und bezieht sich hier auf Messungen an einer Küvette der Schichtdicke 10 mm. Die Absorption der Küvette selbst (Referenzwert) wurde nicht abgezogen. In Abhängigkeit des verwendeten Photometers und der Schichtdicke der Küvette sowie den Absorptionseigenschaften der Küvette sind die Grenzwerte der Absorption entsprechend anzupassen und zu optimieren.

Die Bestimmung eines Grenzwertes der Absorption kann beispielsweise durch eine selektive Festlegung des Grenzwertes erfolgen. Eine vergleichsweise einfache Festlegung kann so funktionieren, dass bestimmte Körperflüssigkeitsprobenklassen ausgewählt werden, deren Absorption sich erwartungsgemäß mittels des Grenzwerts unterscheiden lassen. Beispielsweise wird der erste Grenzwert G1 der Absorption mittels eines Vergleichs der Absorption bei der ersten Wellenlänge, beispielsweise bei 850 nm, zwischen Proben der Klassen Plasma, Serum und EDTA-Plasma einerseits und Proben der Klassen plättchenreiches Plasma und lipämisches Plasma andererseits, bestimmt, da erwartet wird, dass sich die Proben der Klassen Plasma, Serum und EDTA-Plasma durch eine niedrigere Extinktion bei 850 nm von den Proben der Klassen plättchenreiches Plasma und lipämisches Plasma unterscheiden. Benötigt wird eine statistisch ausreichende Zahl eindeutig charakterisierter Proben dieser Klassen. Plasma, Serum und EDTA-Plasma werden in einer Gruppe zusammengefasst. Für diese Gruppe wird ein Normalbereich bestimmt, so dass z.B. die 95% Perzentile der Extinktion bei 850 nm den Grenzwert ergibt. Alternativ kann der Normalbereich auch für die Gruppe mit den beiden Klassen plättchenreiches Plasma und lipämisches Plasma bestimmt werden und dann z.B. die 5% Perzentile der Extinktion bei 850 nm verwendet werden. Eine weitere Möglichkeit ist, beide Verfahren anzuwenden und daraus den Mittelwert als Grenzwert zu verwenden. Alternativ kann auch mittels anderer mathematischer Verfahren der Normalbereich bestimmt werden, z.B. die mittels der zweifachen Standardabweichung.

Das beschriebene Vorgehen zur Bestimmung eines Grenzwertes der Absorption kann analog bei allen Bedingungen mit einem festen Grenzwert der Absorption bei einer Wellenlänge angewendet werden.

Der siebte Grenzwert der Absorption G7, beispielsweise 0,5908 ln(A1) + 2,3509 A, ist ein Beispiel für eine mathematische Formel (zur Unterscheidung von plättchenreichem Plasma und lipämischem Plasma. Als Ausgangsbasis wird eine statistisch ausreichende Zahl eindeutig charakterisierter Proben aus den Klassen plättchenreiches Plasma und lipämisches Plasma benötigt, die keine weiteren Interferenzen aufweisen. Zur Festlegung der Formel gibt es wiederum verschiedene Möglichkeiten. Der Fachmann kann visuell eine logarithmische Funktion auswählen und Parameter der logarithmischen Funktion ermitteln, so dass sich Proben der Klassen lipämisches Plasma und plättchenreiches Plasma besonders eindeutig mittels des Verlaufs des Graphen der logarithmischen Funktion unterscheiden lassen.

Alternativ wird beispielsweise mittels der Absorptionswerte der plättchenreichen Plasma Proben ein Graph einer anderen Funktion (z.B. ein Polynom) angepasst. Für eine solche Funktion kann ein Vertrauensbereich mathematisch berechnet werden. Dessen Grenze differenziert beispielsweise plättchenreiches Plasma von lipämischem Plasma. Alternativ kann der Graph der Funktion auch durch die lipämischen Plasma Proben laufen und der Vertrauensbereich entsprechend berechnet werden, der das lipämische Plasma von plättchenreichem Plasma differenziert. Ebenso können auch beide Vertrauensbereiche kombiniert werden. Dies kann beispielsweise so umgesetzt werden, dass für jedes Wertepaar der Extinktion bei 340 nm und bei 850 nm jeweils ein Grenzwert berechnet wird und der Mittelwert beider Grenzwerte als finaler Grenzwert verwendet wird.

Bevorzugt kann die Bestimmung eines Grenzwertes der Absorption beispielsweise durch eine globale Festlegung erfolgen. Es wird für jede Klasse von Proben eine statistisch ausreichende Anzahl von eindeutig charakterisierten Proben benötigt. Die Extinktion der Proben bei den vom Algorithmus benötigten Wellenlängen wird gemessen. Es wird ein vorläufiger Grenzwert festgelegt, z.B. wie bezüglich der selektiven Festlegung beschrieben. Dann wird für jede Bedingung der Grenzwert iterativ optimiert. Nach jedem Iterationsschritt wird für alle Proben erneut die Klassenzuordnung berechnet. Es verändert sich also nach jedem Schritt möglicherweise der Prozentsatz richtig zugeordneter Proben bei den verschiedenen Klassen. Daher kann bei einer solchen Vorgehensweise gezielt die Anforderung eines bestimmten Labors abgebildet werden. So könnte z.B. ein Labor, bei dem überhaupt keine Serum- oder EDTA-Plasma Proben benutzt werden, eine ungünstige Sensitivität der Klassenzuordnung bei diesen Proben akzeptieren. Die Grenzwerte könnten z.B. im Hinblick auf eine besonders sensitive Erkennung von lipämischen Plasma Proben optimiert werden.

In bevorzugter Ausgestaltung des erfindungsgemäßen Verfahrens ist das Verfahren bezüglich der Charakterisierung der Klassen assayspezifisch optimiert. Beispielsweise kann das erfindungsgemäße Verfahren testspezifisch an die tatsächliche Störung des Assays durch z.B. Triglyzeride angepasst werden. Dazu werden die Proben innerhalb einer Klasse "Triglyzeride" weiter aufgeteilt. Solche Proben, bei denen bei dem untersuchten Test eine Störung auftritt, werden einer Klasse "Triglyzeride mit Störung" zugeordnet, die besonders sensitiv erkannt werden soll. Eine Klasse "Triglyzeride ohne Störung" wird separat betrachtet und muss nicht richtig erkannt werden, da keine Störung auftritt. Weiterhin können auch Unterklassen definiert werden, z.B. "Keine Störung", "Störung bis zu 10% relativ", "Störung bis zu 20% relativ" etc. Darüber hinaus können auch Klassen mit bestimmten Interferenzfaktor-Gehalten der Proben definiert werden, z.B. "Triglycerid-Werte von 150 bis 250 mg/dL". Bei einer solchen Vorgehensweise müssen entsprechende Warnhinweise testspezifisch ausgegeben werden. So kann z.B. bei der gleichen Probe der Test X den Warnhinweis hervorrufen "Vorsicht - Interferenz durch Triglyzeride", während beim Test Y nach Messung der gleichen Probe kein Warnhinweis erscheint. Diese Vorgehensweise ist grundsätzlich in Analogie bei allen Klassen von Körperflüssigkeitsproben und Interferenzen anwendbar.

Gemäß einer weiteren vorteilhaften Ausführungsform des Verfahrens wird

die ersten Absorption A1 bei einer Wellenlänge, die im Bereich zwischen 610 nm und 930 nm liegt und bevorzugt 660 nm oder 800 nm beträgt, gemessen,

wobei die zweite Absorption A2 bei einer Wellenlänge, die im Bereich zwischen 300 nm und 430 nm liegt und bevorzugt 405 nm beträgt, gemessen wird,

und wobei die Messung der dritte Absorption A3, die Bildung des dritten Grenzwertes G3 und alle diesbezüglichen Bedingungen des Verfahrens entfallen,

und wobei die vierte Absorption A4 bei einer Wellenlänge, die im Bereich zwischen 300 nm und 430 nm liegt und bevorzugt 405 nm beträgt, gemessen wird,

und wobei die fünfte Absorption A5 durch die siebte Absorption A7 im gesamten Verfahren ersetzt wird,

und wobei die sechste Absorption A6 bei einer Wellenlänge, die im Bereich zwischen 300 nm und 430 nm liegt und bevorzugt 405 nm oder 340 nm beträgt, gemessen wird,

und wobei die siebte Absorption A7 bei einer Wellenlänge, die im Bereich zwischen 350 nm und 650 nm liegt und bevorzugt 575 nm beträgt, gemessen wird.

Gemäß einer weiteren vorteilhaften Ausführungsform des Verfahrens beträgt

der erste Grenzwert der Absorption G1 0,23 A, der zweite Grenzwert der Absorption G2 1,4 A, der vierte Grenzwert der Absorption G4 1,1 A, der fünfte Grenzwert des Verhältnisses der Absorptionen G5 7,0 A, der sechste Grenzwert der Absorption G6 0,8426 ln(A1) + 2,4406 A oder 0,7354 ln(A1) + 2,5936, der siebte Grenzwert der Absorption G7 -0,1193 (A1$^2$) + 1,0384 A1 + 1,1343 A oder -0,6466 A1 + 2,3856 A und/oder der achte Grenzwert der Absorption G8 0,6 A.

Gemäß einer weiteren vorteilhaften Ausführungsform des Verfahrens erfolgt das Durchstrahlen der Körperflüssigkeitsprobe mithilfe von mindestens einer, bevorzugt zwei bis 10, besonders bevorzugt vier bis sechs Laser - und/oder Leuchtdioden und das Erfassen der Vielzahl von Absorptionen (A1; A2; A2; A4; A5; A6; A7) mithilfe mindestens eines photometrischen Sensors. Die hat den Vorteil, dass das Verfahren besonders schnell und kostengünstig durchführbar ist.

Die Erfindung betrifft weiter ein System, z.B. ein Analysegerät, zur Zuordnung einer Körperflüssigkeitsprobe zu einer Körperflüssigkeitsprobenklasse aus der Gruppe Citrat-Plasma, lipämisches Plasma oder Serum, plättchenreiches Plasma oder Serum, EDTA-Plasma, Serum, Plasma oder Serum mit Bilirubin, und Plasma oder Serum mit Hämoglobin, mit:

I) einer Messeinrichtung, welche dazu ausgelegt ist, eine Körperflüssigkeitsprobe mit Lichtstrahlen mit einer Vielzahl von Wellenlängen zu durchstrahlen und Messung einer Vielzahl von Absorptionen der Körperflüssigkeitsprobe bei der Vielzahl von Wellenlängen durchzuführen, wobei
die Messung einer ersten Absorption A1 der Körperflüssigkeitsprobe bei einer ersten Wellenlänge, die im Bereich zwischen 610 nm und 930 nm liegt, die Messung einer zweiten Absorption A2 der Körperflüssigkeitsprobe bei einer zweiten Wellenlänge, die im Bereich zwischen 420 nm und 480 nm liegt,
die Messung einer dritten Absorption A3 der Körperflüssigkeitsprobe bei einer dritten Wellenlänge, die im Bereich zwischen 350 nm und 410 nm liegt,
die Messung einer vierten Absorption A4 der Körperflüssigkeitsprobe bei einer vierten Wellenlänge, die im Bereich zwischen 390 nm und 430 nm liegt,
die Messung einer fünften Absorption A5 der Körperflüssigkeitsprobe bei einer fünften Wellenlänge, die im Bereich zwischen 445nm und 485 nm liegt,
die Messung einer sechsten Absorption A6 der Körperflüssigkeitsprobe bei einer sechsten Wellenlänge, die im Bereich zwischen 320 nm und 400 nm liegt,
die Messung einer siebten Absorption A7 der Körperflüssigkeitsprobe bei einer siebten Wellenlänge, die im Bereich zwischen 460 nm und 650 nm liegt, erfolgt, und

II) einer Berechnungseinrichtung, welche dazu ausgelegt ist, die erste Absorption A1 mit einem vorbestimmten ersten Grenzwert G1 der Absorption,
die zweite Absorption A2 mit einem vorbestimmten zweiten Grenzwert G2 der Absorption,
die dritte Absorption A3 mit einem vorbestimmten dritten Grenzwert G3 der Absorption,
die vierte Absorption A4 mit einem vorbestimmten vierten Grenzwert G4 der Absorption zu vergleichen, und

III) einer Berechnungseinrichtung, welche dazu ausgelegt ist, ein erstes Verhältnis der vierten Absorption A4 und der fünften Absorption A5 zu bilden und das erste Verhältnis mit einem vorbestimmten fünften Grenzwert G5 des Verhältnisses der Absorptionen zu vergleichen, und

IV) einer Berechnungseinrichtung, welche dazu ausgelegt ist, einen von der ersten Absorption A1 abhängigen sechsten
Grenzwert G6 der Absorption zu bilden und die sechste Absorption A6 mit dem sechsten Grenzwert G6 der Absorption zu vergleichen, und

einen von der ersten Absorption A1 abhängigen siebten Grenzwert G7 der Absorption zu bilden und die sechste Absorption A6 mit dem siebten Grenzwert G7 der Absorption zu vergleichen, und

einen von der siebten Absorption A7 abhängigen achten Grenzwert G8 der Absorption zu bilden und die fünften Absorption A5 mit dem achten Grenzwert G8 der Absorption zu vergleichen, und

V) einer Berechnungseinrichtung, welche dazu ausgelegt ist, die Körperflüssigkeitsprobe zu der Körperflüssigkeitsprobenklasse Citrat-Plasma zuzuordnen, falls A1 kleiner G1 und A2 kleiner G2 und A3 kleiner G3 und A4 kleiner G4, oder

die Körperflüssigkeitsprobe zu der Körperflüssigkeitsprobenklasse EDTA-Plasma zuzuordnen, falls A1 kleiner G1 und A2 kleiner G2 und A3 kleiner G3 und A4 größer G4 und das Verhältnis von A4 und A5 kleiner G5, oder die Körperflüssigkeitsprobe zu der Körperflüssigkeitsprobenklasse Serum zuzuordnen, falls A1 kleiner G1 und A2 kleiner G2 und A3 kleiner G3 und A4 größer G4 und das erste Verhältnis von A4 und A5 größer G5, oder

die Körperflüssigkeitsprobe zu der Körperflüssigkeitsprobenklasse plättchenreiches Plasma oder plättchenreiches Serum zuzuordnen, falls A1 größer G1 und A6 kleiner G6 und A6 kleiner G7, oder

die Körperflüssigkeitsprobe zu der Körperflüssigkeitsprobenklasse lipämisches Plasma oder lipämisches Serum zuzuordnen, falls A1 größer G1 und A6 kleiner G6 und A6 größer G7, oder

die Körperflüssigkeitsprobe zu der Körperflüssigkeitsprobenklasse Plasma mit Hämoglobin oder Serum mit Hämoglobin zuzuordnen, falls A1 größer G1 und A6 größer G6 und A5 kleiner G8, oder falls A1 kleiner G1 und A2 größer G2 und A5 kleiner G8, oder falls A1 kleiner G1 und A3 größer G3 und A5 kleiner G8, oder falls A1 kleiner G1 und A2 größer G2 und A3 größer G3 und A5 kleiner G8, oder

die Körperflüssigkeitsprobe zu der Körperflüssigkeitsprobenklasse Plasma mit Bilirubin oder Serum mit Bilirubin zuzuordnen, falls A1 größer G1 und A6 größer G6 und A5 größer G8 ist, oder falls A1 kleiner G1 und A2 größer G2 und A5 größer G8, oder falls A1 kleiner G1 und A3 größer G3 und A5 größer G8, oder falls A1 kleiner G1 und A2 größer G2 und A3 größer G3 und A5 größer G8,

wobei die erste, zweite, dritte und vierte Wellenlänge voneinander verschieden sind.

In einer bevorzugten Ausführung des Systems sind die zweite und die fünfte, die dritte und die sechste sowie die vierte und die siebte Wellenlänge gleich.

In einer weiteren bevorzugten Ausführung des Systems beträgt die erste Wellenlänge 645 nm, die zweite Wellenlänge 470 nm, die dritte Wellenlänge 365 nm, die vierte Wellenlänge 415 nm, die fünfte Wellenlänge 470 nm, die sechste Wellenlänge 365 nm und die siebte Wellenlänge 415 nm.

In einer weiteren bevorzugten Ausführung des Systems beträgt der erste Grenzwert der Absorption G1 0,23 A, der zweite Grenzwert der Absorption G2 1,4 A, der dritte Grenzwert der Absorption G3 1,2 A, der vierte Grenzwert der Absorption G4 1,1 A, der fünfte Grenzwert des Verhältnisses der Absorptionen G5 1,2 A, der sechste Grenzwert der Absorption G6 $0,8935 \ln(A1) + 2,2804$ A, der siebte Grenzwert der Absorption G7 $-0,1271 (A1^2) + 1,0857 A1 + 1,0244$ A und/oder der achte Grenzwert der Absorption G8 $0,82 A7 + 0,13$ A.

Weitere bevorzugte Ausführungsformen des erfindungsgemäßen Systems werden erhalten, wenn die Systeme entsprechend der verschiedenen erfindungsgemäßen Verfahren modifiziert werden.

In einer bevorzugten Ausführung des Systems erfolgt das Durchstrahlen der Körperflüssigkeitsprobe mithilfe von Laser-oder Leuchtdioden und das Erfassen der Vielzahl von Absorptionen (A1; A2; A2; A4; A5; A6; A7) mithilfe eines photometrischen Sensors.

Ein weiterer Gegenstand der Erfindung ist ein Automatischer Analysator umfassend ein erfindungsgemäßes System.

Vorteilhafterweise kann die Körperflüssigkeitsprobe Blutserum oder Blutplasma umfassen.

Der Begriff "plättchenreiches Plasma" umfasst eine Plasmaprobe eines Individuums, bevorzugt eine Plasmaprobe eines menschlichen Individuums, bei der durch eine schwache Zentrifugation erreicht wurde, dass die Thrombozyten nicht sedimentieren und somit in der Plasmaprobe verbleiben. Im Sinne dieser Erfindung, bei der ein Plasmaprobe mit einer gegenüber des plättchenarmen Plasmas deutlich erhöhten Thrombozytenzahl detektiert werden soll, wird plättchenreiches Plasma so definiert, dass die Probe wie für die Herstellung von plättchenreichem Plasma typisch zentrifugiert wurde.

Plättchenreiches Plasma enthält somit mehr als 10 000, bevorzugt mehr als 50 000, Plättchen pro Mikroliter [$\mu$L] Probe. Dem Fachmann sind diverse Verfahren zur Gewinnung von plättchenreichem Plasma aus einer Vollblutprobe bekannt. Einige übliche

Verfahren funktionieren wie folgt: Eine antikoagulierte Vollblutprobe wird bei 170 g für 15 Minuten oder 150 g oder für 15 Minuten oder bei 180 g für 10 Minuten zentrifugiert. Dadurch wird erreicht, dass

sich eine untere Schicht aus roten und weißen Blutzellen bildet und darüber eine Schicht plättchenreiches Plasma.

Letzteres wird vorsichtig ohne Vermischung mit der unteren Schicht entnommen.

Plättchenarmes Plasma hingegen, das üblicherweise gemeint ist, wenn der Begriff "Plasma" verwendet wird, ist idealerweise plättchenfrei, sollte aber weniger als 10 000 Plättchen pro Mikroliter [µL] Probe enthalten. Im Sinne dieses Verfahrens, welches eindeutig plättchenreiche Proben von plättchenarmen Proben unterscheiden soll, werden auch noch Proben, die nach Zentrifugationsverfahren für plättchenarmes Plasma hergestellt wurden, als solche definiert, wenn sie durch Zentrifugation wie für plättchenarmes Plasma typisch hergestellt wurden. Wenn das erfindungsgemäße Verfahren für die Erkennung von schwach erhöhten Thrombozytenzahlen eingesetzt werden soll, kann diese definierte Grenze auch auf bis zu 10 000 Plättchen pro Mikroliter [µL] Probe erniedrigt werden. Dem Fachmann sind diverse Verfahren zur Gewinnung von plättchenarmem Plasma aus einer Vollblutprobe bekannt. Einige übliche Verfahren funktionieren wie folgt: Eine antikoagulierte Vollblutprobe wird bei 1500 g für 15 Minuten oder bei 1500 g für 10 Minuten oder bei 2000 g für 20 Minuten zentrifugiert. Dadurch wird erreicht, dass sich eine untere Schicht aus roten und weißen Blutzellen und aus Plättchen bildet und darüber eine Schicht plättchenarmes Plasma. Letzteres wird vorsichtig ohne Vermischung mit der unteren Schicht entnommen.

Bei plättchenarmem Plasma handelt es sich um "Citrat-Plasma". Die Begriffe "plättchenarmes Plasma", "(Citrat-) Plasma" sowie "Citrat-Plasma" werden synonym verwendet und bezeichnen die gleiche Körperflüssigkeitsprobenklasse. Insbesondere handelt es sich bei Plasma, falls nicht anders angegeben, um plättchenarmes Plasma.

Der Begriff "Citrat-Plasma" umfasst eine

Plasmaprobe eines Individuums, bevorzugt eine Plasmaprobe eines menschlichen Individuums, von dessen Blut 9 Volumenanteile mit einem Volumenanteil Natriumzitratlösung antikoaguliert wurde. Weit verbreitet sind 3,2 %ige und 3,8 %ige Natriumzitratlösungen. Die Blutprobe wird zur Gewinnung des Plasma-Überstandes zentrifugiert.

Der Begriff "lipämisches Plasma oder Serum" umfasst eine Plasmaprobe eines Individuums, bevorzugt eine Plasmaprobe eines menschlichen Individuums, die einen über den Normalbereich erhöhten Wert an Fetten, insbesondere Triglyzeriden, aufweist. Die Normalbereichsgrenze wird üblicherweise bei 150 mg/dL, teilweise auch bei 200 mg/dL Triglyzeride angegeben.

Der Begriff "EDTA-Plasma oder Serum" umfasst eine Plasmaprobe eines Individuums, bevorzugt eine Plasmaprobe eines menschlichen Individuums, die mit EDTA antikoaguliert wurde (EDTA-Plasma) oder gar nicht antikoaguliert und spontan geronnen ist (Serum). Zur Gewinnung des Plasma- oder Serum-Überstands wird die Blutprobe zentrifugiert.

Der Begriff "Plasma oder Serum mit Bilirubin" umfasst eine Plasma- oder Serumprobe eines Individuums, bevorzugt eine Plasma- oder Serumprobe

eines menschlichen Individuums, die einen Bilirubingehalt oberhalb des Normalbereichs aufweist. Die Obergrenze des Normalbereichs wird häufig mit 1,2 mg/dL angegeben.

Der Begriff "Plasma oder Serum mit Hämoglobin" umfasst eine Plasma- oder Serumprobe eines Individuums, bevorzugt eine Plasma- oder Serumprobe

eines menschlichen Individuums, die einen Hämoglobingehalt oberhalb des Normalbereichs aufweist. Dessen Obergrenze wird bei Plasma häufig mit 20 mg/dL und bei Serum mit 50 mg/dL angegeben.

Der Begriff "Serum" umfasst eine

Serumprobe eines Individuums, bevorzugt eine Serumprobe eines menschlichen Individuums, also den zellfreien Überstand des Blutes nach Abschluss der Gerinnung und vorteilhafterweise nach Zentrifugation.

Unter dem Begriff "Absorption" ist im allgemeineren Sinn auch "Extinktion" zu verstehen. Insbesondere ist unter einer "Messung einer Absorption" im allgemeineren Sinn auch die "Messung einer Extinktion" zu verstehen. Die Begriffe "Absorption" und "Extinktion" werden bezüglich der vorliegenden Erfindung austauschbar verwendet.

Der Begriff "ln(x)" bezeichnet Logarithmen zur Basis e, wobei e die eulersche Zahl bezeichnet, die näherungsweise 2,71828 beträgt. Logarithmen zur Basis e werden allgemein auch als natürliche Logarithmen bezeichnet.

Soweit im Kontext dieser Anmeldung Ungleichungen, d.h. z.B. Aussagen oder Bedingungen, dass ein erster Wert kleiner als ein zweiter Wert sei, angegeben sind, kann jeweils auch die Gleichheit der jeweiligen Werte sinngemäß umfasst sein.

## Kurze Beschreibung der Figuren

Verschiedene Ausführungsformen und Ausgestaltungen der vorliegenden Erfindung werden nun in Bezug auf die beiliegenden Zeichnungen genauer beschrieben.

**Fig. 1** zeigt eine schematische Darstellung eines Flussdiagramms mit Bedingungen zur Zuordnung von Körperflüssigkeitsproben zu Körperflüssigkeitsprobenklassen gemäß einer Ausführungsform der Erfindung;

**Fig. 2** zeigt eine Tabelle mit Ergebnissen des Anwendungsbeispiels aus Fig. 1 der Zuordnung von Körperflüssigkeitsproben zu Körperflüssigkeitsprobenklassen;

**Fig. 3** zeigt eine schematische Darstellung eines Flussdiagramms mit Bedingungen zur Zuordnung von Körperflüssigkeitsproben zu Körperflüssigkeitsprobenklassen gemäß einer weiteren Ausführungsform der Erfindung;

**Fig. 4** zeigt eine Tabelle mit Ergebnissen des Anwendungsbeispiels aus Fig. 3 der Zuordnung von Körperflüssigkeitsproben zu Körperflüssigkeitsprobenklassen.

**Fig. 5** zeigt eine schematische Darstellung eines Flussdiagramms mit Bedingungen zur Zuordnung von Körperflüssigkeitsproben zu Körperflüssigkeitsprobenklassen gemäß einer weiteren Ausführungsform der Erfindung;

**Fig. 6** zeigt eine Tabelle mit Ergebnissen des Anwendungsbeispiels aus Fig. 5 der Zuordnung von Körperflüssigkeitsproben zu Körperflüssigkeitsprobenklassen.

Die beschriebenen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Gleiche Bezugszeichen bezeichnen dabei gleiche oder ähnlich wirkende Komponenten.

Körperflüssigkeitsproben im Sinne der vorliegenden Erfindung können alle Proben biologischen Ursprungs sein, welche flüssige Konsistenz aufweisen und eine Vielzahl von biologisch aktiven Substanzen in verschiedenen Konzentrationen aufweisen. Beispielsweise können Körperflüssigkeitsproben Blutserum, Blutplasma, Blut, Urin, Lymphflüssigkeit, Gallenflüssigkeit oder ähnliche Flüssigkeiten aufweisen.

Photometrische Messwerte im Sinne der vorliegenden Erfindung können Messwerte sein, welche mit photometrischen Messeinrichtungen und zugehörigen Lichtquellen, insbesondere Lasern, Laserdioden, Leuchtdioden oder dergleichen aufgenommen werden können. Messeinrichtungen umfassen beispielsweise CCD-Sensoren, CMOS-Sensoren, Photosensoren oder ähnliche Einrichtungen, welche dazu geeignet sind, die Intensität eines Lichtstrahls wellenlängenabhängig zu erfassen. Mittel photometrischer Messwerte kann die Absorption einer Körperflüssigkeitsprobe bei vorbestimmten Wellenlängen erfolgen.

Lipide im Sinne der vorliegenden Anmeldung können alle im Wesentlichen hydrophoben organischen Verbindungen umfassen, insbesondere im menschlichen oder tierischen Organismus vorkommende Verbindungen. Lipide im Sinne der Erfindung umfassen dabei insbesondere Fette bzw. Triglyceride bzw. Triacylglycerine, welche im menschlichen Körper vorkommen können.

Extinktionskurven und Extinktionswerte im Sinne der vorliegenden Erfindung können dimensionslose Größen sein, welche ein wellenlängenabhängiges Maß für die Opazität von Körperflüssigkeitsproben gegenüber dem Durchgang von Lichtstrahlen im sichtbaren, infraroten und/oder ultravioletten Wellenlängenbereich angeben. Es kann gleichermaßen auch möglich sein, dass Extinktionswerte in Bezug auf eine Einheitsdicke einer Messzelle oder Küvette, in der Körperflüssigkeitsproben während des Durchtritts von Lichtstrahlen zur Erfassung von Intensitätsmesswerten gehalten werden, angegeben werden. In diesem Fall können die Extinktionswerte eine Dimension von [1/cm] aufweisen. In jedem Fall sind die angegebenen Extinktionswerte der nachfolgenden Ausführungsformen nur beispielhafter Natur und von der Messapparatur, der Probenbeschaffenheit und der Probenzusammensetzung abhängig. Extinktionswerte werden im Folgenden jeweils mit Absorptionswerten gleichgesetzt, obwohl es dem Fachmann klar ist, dass bei dieser Betrachtung Diffraktion, Streuung und Reflexion zwar zu den Extinktionswerten beitragen, gegenüber der Absorption jedoch im betrachteten Wellenlängenbereich im Wesentlichen vernachlässigbar sind.

In Körperflüssigkeitsproben können häufig Hämoglobin, Bilirubin und Lipide, insbesondere Triacylglycerine (Triglyceride), enthalten sein. Zur Zuordnung einer Körperflüssigkeitsprobe zu einer Körperflüssigkeitsprobenklasse aus der Gruppe Citrat-Plasma, lipämisches Plasma oder Serum, plättchenreiches Plasma oder Serum, EDTA-Plasma, Serum, Plasma oder Serum mit Bilirubin, und Plasma oder Serum mit Hämoglobin kann es wichtig sein, den Lipidanteil zu bestimmen.

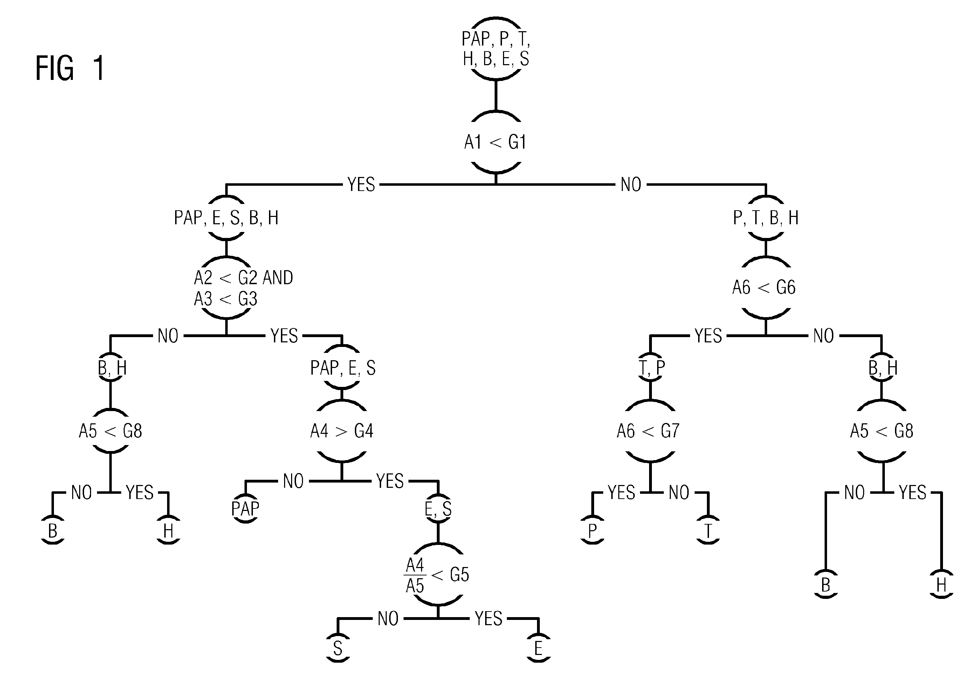

**Fig. 1** zeigt eine schematische Darstellung eines Flussdiagramms gemäß einer bevorzugten Ausführungsform der Erfindung.

Die erste Wellenlänge beträgt 645 nm, die zweite Wellenlänge 470 nm, die dritte Wellenlänge 365 nm, die vierte Wellenlänge 415 nm, die fünfte Wellenlänge 470 nm, die sechste Wellenlänge 365 nm und die siebte Wellenlänge 415 nm. Bei den jeweiligen Wellenlängen wird eine entsprechende Absorption ($A_1$, $A_2$, $A_3$, $A_4$, $A_5$, $A_6$, $A_7$) der Körperflüssigkeitsprobe gemessen und es wird ein erstes Verhältnis der vierten Absorption $A_4$ und der fünften Absorption $A_5$ gebildet. Weiter werden Grenzwerte der Absorption ($G_1$, $G_2$, $G_3$, $G_4$, $G_5$, $G_6$, $G_7$, $G_8$) gebildet.

Der erste Grenzwert der Absorption G1 beträgt 0,23 A, der zweite Grenzwert der Absorption G2 1,4 A, der dritte Grenzwert der Absorption G3 1,2 A, der vierte Grenzwert der Absorption G4 1,1 A, der fünfte Grenzwert des Verhältnisses der Absorptionen G5 1,2, der sechste Grenzwert der Absorption G6 0,8935 ln(A1) + 2,2804 A, der siebte Grenzwert der Absorption G7 -0,1271 (A1$^2$) + 1,0857 A1 + 1,0244 A und der achte Grenzwert der Absorption G8 0,82 A7+ 1,3 A.

Die Absorption ist in der Einheit A angegeben und bezieht sich auf Messungen an eine Küvette der Schichtdicke 10 mm. Die Einheit A wird dimensionslos dargestellt.

Die Zuordnung einer Körperflüssigkeitsprobe zu einer Körperflüssigkeitsprobenklasse aus der Gruppe Citrat-Plasma (PAP), lipämisches Plasma oder lipämisches Serum (T), plättchenreiches Plasma oder plättchenreiches Serum (P), EDTA-Plasma (E), Serum (S), Plasma mit Bilirubin oder Serum mit Bilirubin (B), und Plasma mit Hämoglobin oder Serum mit Hämoglobin (H) erfolgt mittels Zuordnung der gemessenen Absorptionen zur entsprechenden Körperflüssigkeitsprobenklasse unter Zuhilfenahme der entsprechenden Grenzwerte.

Dabei erfolgt die Zuordnung der Körperflüssigkeitsprobe zu der Körperflüssigkeitsprobenklasse Citrat-Plasma (PAP), falls A1 kleiner G1 und A2 kleiner G2 und A3 kleiner G3 und A4 kleiner G4, oder zu der Körperflüssigkeitsprobenklasse EDTA-Plasma (E), falls A1 kleiner G1 und A2 kleiner G2 und A3 kleiner G3 und A4 größer G4 und das Verhältnis von A4 und A5 kleiner G5, oder zu der Körperflüssigkeitsprobenklasse Serum (S), falls A1 kleiner G1 und A2 kleiner G2 und A3 kleiner G3 und A4 größer G4 und das erste Verhältnis von A4 und A5 größer G5,

oder zu der Körperflüssigkeitsprobenklasse plättchenreiches Plasma oder plättchenreiches Serum (P), falls A1 größer G1 und A6 kleiner G6 und A6 kleiner G7, oder zu der Körperflüssigkeitsprobenklasse lipämisches Plasma oder lipämisches Serum (T), falls A1 größer G1 und A6 kleiner G6 und A6 größer G7, oder zu der Körperflüssigkeitsprobenklasse Plasma mit Hämoglobin oder Serum mit Hämoglobin (H), falls A1 größer G1 und A6 größer G6 und A5 kleiner G8, oder falls A1 kleiner G1 und A2 größer G2 und A5 kleiner G8, oder falls A1 kleiner G1 und A3 größer G3 und A5 kleiner G8, oder falls A1 kleiner G1 und A2 größer G2 und A3 größer G3 und A5 kleiner G8,

oder zu der Körperflüssigkeitsprobenklasse Plasma mit Bilirubin oder Serum mit Bilirubin (B), falls A1 größer G1 und A6 größer G6 und A5 größer G8 ist, oder falls A1 kleiner G1 und A2 größer G2 und A5 größer G8, oder falls A1 kleiner G1 und A3 größer G3 und A5 größer G8, oder falls A1 kleiner G1 und A2 größer G2 und A3 größer G3 und A5 größer G8 ist.

Die Zuordnung der Körperflüssigkeitsprobe zu einer Körperflüssigkeitsprobenklasse erfolgt automatisch mittels eines Systems mit einer Messeinrichtung, welche dazu ausgelegt ist, eine Körperflüssigkeitsprobe mit Lichtstrahlen mit einer Vielzahl von Wellenlängen zu durchstrahlen und Messung einer Vielzahl von Absorptionen der Körperflüssigkeitsprobe bei der Vielzahl von Wellenlängen durchzuführen. Weiter umfasst das System eine Berechnungseinrichtung für die Berechnung der entsprechenden Schritte des erfindungsgemäßen Verfahrens.

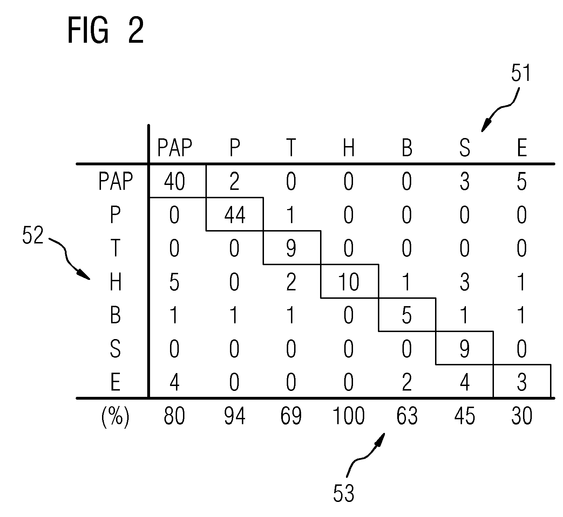

**Fig. 2** zeigt eine tabellarische Zusammenfassung experimentell bestimmter Zuordnungen (52) von Körperflüssigkeitsproben zu Körperflüssigkeitsprobenklassen (51) gemäß der Ausführungsform der Erfindung aus Fig. 1. Angegeben ist jeweils die Anzahl der Körperflüssigkeitsproben der entsprechenden Körperflüssigkeitsprobenklassen. Weiter ist der mittels des erfindungsgemäßen Verfahrens richtig erkannte Anteil (53) der Körperflüssigkeitsproben in Prozent (%) angegeben. Die Gesamtanzahl der Proben betrug für (Citrat-) Plasma (PAP) 50, für plättchenreiches Plasma (P) 47, für lipämisches Plasma (T) 13, für Plasma mit Hämoglobin (H) 10, für Plasma mit Bilirubin (B) 8, für Serum (S) 20 und für EDTA-Plasma (E) 10.

(Citrat-) Plasma (PAP) wurde durch Zentrifugation bei 1500 g für 15 Minuten oder bei 1500 g für 10 Minuten oder bei 2000 g für 20 Minuten gewonnen.

Plättchenreiches Plasma (P) wurde aus dem Überstand nach Zentrifugation von Blut bei 170 g für 15 Minuten oder 150 g oder für 15 Minuten oder bei 180 g für 10 Minuten gewonnen.

Lipämisches Plasma (T) enthält mehr als 150 mg/dL Triglyzeride.

Plasma mit Hämoglobin (H) enthält mehr als 20 mg/dL Hämoglobin.

Plasma mit Bilirubin (B) enthält mehr als 1,2 mg/dL Bilirubin.

Serum (S) wurde aus dem Überstand nach Zentrifugation von spontan geronnenem Blut gewonnen.

EDTA-Plasma (E) wurde aus dem Überstand von zentrifugierten Blut gewonnen und mit EDTA antikoaguliert.

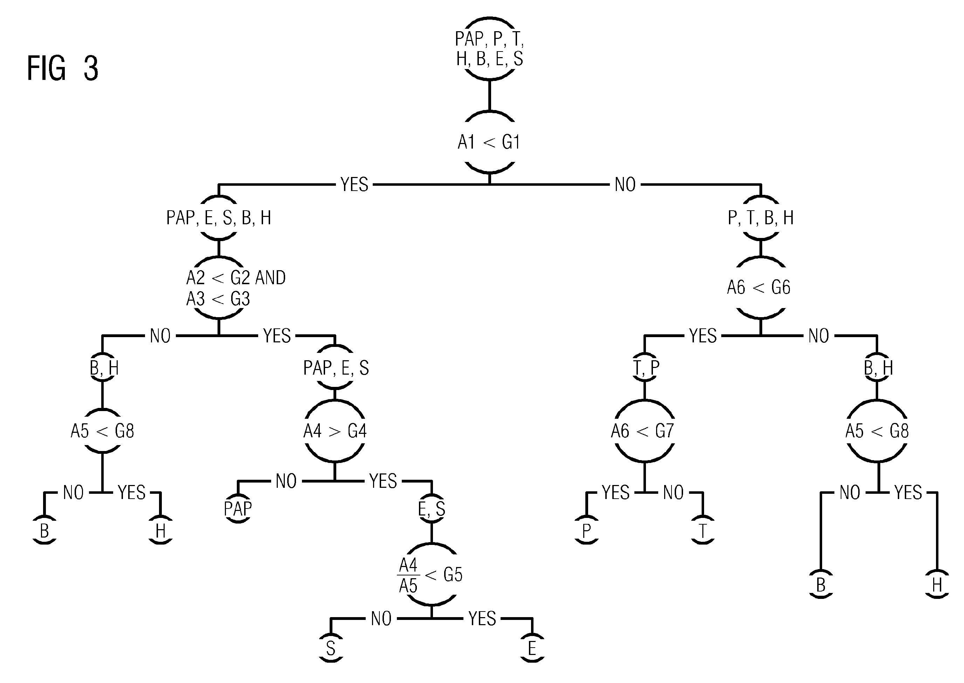

**Fig. 3** zeigt eine schematische Darstellung eines Flussdiagramms gemäß einer weiteren bevorzugten Ausführungsform der Erfindung.

Die erste Wellenlänge beträgt 850 nm, die zweite Wellenlänge 450 nm, die dritte Wellenlänge 380 nm, die vierte Wellenlänge 410 nm, die fünfte Wellenlänge 465 nm, die sechste Wellenlänge 340 nm und die siebte Wellenlänge 550 nm. Bei den jeweiligen Wellenlängen wird eine entsprechende Absorption (A1, A2, A3, A4, A5, A6, A7) der Körperflüssigkeitsprobe gemessen und es wird ein erstes Verhältnis der vierten Absorption A4 und der fünften Absorption A5 wird gebildet.

Weiter werden Grenzwerte der Absorption (G1, G2, G3, G4, G5, G6, G7, G8) gebildet.

Der erste Grenzwert der Absorption G1 beträgt 0,15 A, der zweite Grenzwert der Absorption G2 1,4 A, der dritte Grenzwert der Absorption G3 1,2 A, der vierte Grenzwert der Absorption G4 1,1 A, der fünfte Grenzwert des Verhältnisses der Absorptionen G5 1,1 A, der sechste Grenzwert der Absorption G6 0,7016 ln(A1) + 2,7 A, der siebte Grenzwert der Absorption G7 0,5908 ln(A1) + 2,3509 A, der achte Grenzwert der Absorption G8 0,96 A7 + 1,1 A. Die Absorption ist in der Einheit A angegeben und bezieht sich auf Messungen an eine Küvette der Schichtdicke 10 mm. Die Einheit A wird dimensionslos dargestellt.

Die Zuordnung einer Körperflüssigkeitsprobe zu einer Körperflüssigkeitsprobenklasse aus der Gruppe Citrat-Plasma (PAP), lipämisches Plasma oder lipämisches Serum (T), plättchenreiches Plasma oder plättchenreiches Serum (P), EDTA-Plasma (E), Serum (S), Plasma mit Bilirubin oder Serum mit Bilirubin (B), und Plasma mit Hämoglobin oder Serum mit Hämoglobin (H) erfolgt mittels Zuordnung der gemessenen Absorptionen zur entsprechenden Körperflüssigkeitsprobenklasse unter Zuhilfenahme der entsprechenden Grenzwerte.

Dabei erfolgt die Zuordnung der Körperflüssigkeitsprobe zu der Körperflüssigkeitsprobenklasse Citrat-Plasma (PAP), falls A1 kleiner G1 und A2 kleiner G2 und A3 kleiner G3 und A4 kleiner G4, oder zu der Körperflüssigkeitsprobenklasse EDTA-Plasma (E), falls A1 kleiner G1 und A2 kleiner G2 und A3 kleiner G3 und A4 größer G4 und das Verhältnis von A4 und A5 kleiner G5, oder zu der Körperflüssigkeitsprobenklasse Serum (S), falls A1 kleiner G1 und A2 kleiner G2 und A3 kleiner G3 und A4 größer G4 und das erste Verhältnis von A4 und A5 größer G5, oder zu der Körperflüssigkeitsprobenklasse plättchenreiches Plasma oder plättchenreiches Serum (P), falls A1 größer G1 und A6 kleiner G6 und A6 kleiner G7, oder zu der Körperflüssigkeitsprobenklasse lipämisches Plasma oder lipämisches Serum (T), falls A1 größer G1 und A6 kleiner G6 und A6 größer G7, oder zu der Körperflüssigkeitsprobenklasse Plasma mit Hämoglobin oder Serum mit Hämoglobin (H), falls A1 größer G1 und A6 größer G6 und A5 kleiner G8, oder falls A1 kleiner G1 und A2 größer G2 und A5 kleiner G8, oder falls A1 kleiner G1 und A3 größer G3 und A5 kleiner G8, oder falls A1 kleiner G1 und A2 größer G2 und A3 größer G3 und A5 kleiner G8, oder zu der Körperflüssigkeitsprobenklasse Plasma mit Bilirubin oder Serum mit Bilirubin (B), falls A1 größer G1 und A6 größer G6 und A5 größer G8 ist, oder falls A1 kleiner G1 und A2 größer G2 und A5 größer G8, oder falls A1 kleiner G1 und A3 größer G3 und A5 größer G8, oder falls A1 kleiner G1 und A2 größer G2 und A3 größer G3 und A5 größer G8ist.

Die Zuordnung der Körperflüssigkeitsprobe zu einer Körperflüssigkeitsprobenklasse erfolgt automatisch mittels eines Systems mit einer Messeinrichtung, welche dazu ausgelegt ist, eine Körperflüssigkeitsprobe mit Lichtstrahlen mit einer Vielzahl von Wellenlängen zu durchstrahlen und Messung einer Vielzahl von Absorptionen der Körperflüssigkeitsprobe bei der Vielzahl von Wellenlängen durchzuführen. Weiter umfasst das System eine Berechnungseinrichtung für die Berechnung der entsprechenden Schritte des erfindungsgemäßen Verfahrens.

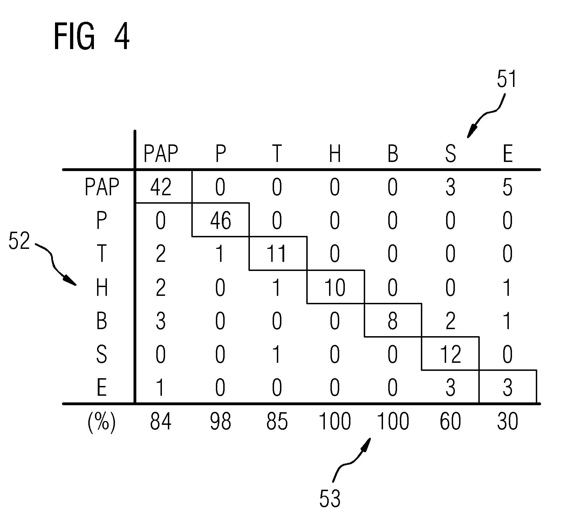

Fig. 4 zeigt eine tabellarische Zusammenfassung experimentell bestimmter Zuordnungen (52) von Körperflüssigkeitsproben zu Körperflüssigkeitsprobenklassen (51) gemäß einer Ausführungsform der Erfindung. Angegeben ist jeweils die Anzahl der Körperflüssigkeitsproben der entsprechenden Körperflüssigkeitsprobenklassen. Weiter ist der mittels des erfindungsgemäßen Verfahrens richtig erkannte Anteil (53) der Körperflüssigkeitsproben in Prozent (%) angegeben. Die Gesamtanzahl der Proben betrug für (Citrat-) Plasma (PAP) 50, für plättchenreiches Plasma (P) 47, für lipämisches Plasma (T) 13, für Plasma mit Hämoglobin (H) 10, für Plasma mit Bilirubin (B) 8, für Serum (S) 20 und für EDTA-Plasma (E) 10.

(Citrat-) Plasma (PAP) wurde durch Zentrifugation bei 1500 g für 15 Minuten oder bei 1500 g für 10 Minuten oder bei 2000 g für 20 Minuten gewonnen.

Plättchenreiches Plasma (P) wurde aus dem Überstand nach Zentrifugation von Blut bei 170 g für 15 Minuten oder 150 g oder für 15 Minuten oder bei 180 g für 10 Minuten gewonnen.

Lipämisches Plasma (T) enthält mehr als 150 mg/dL Triglyzeride.

Plasma mit Hämoglobin (H) enthält mehr als 20 mg/dL Hämoglobin.

Plasma mit Bilirubin (B) enthält mehr als 1,2 mg/dL Bilirubin.

Serum (S) wurde aus dem Überstand nach Zentrifugation von spontan geronnenem Blut gewonnen.

EDTA-Plasma E) wurde aus dem Überstand von zentrifugierten Blut gewonnen und mit EDTA antikoaguliert.

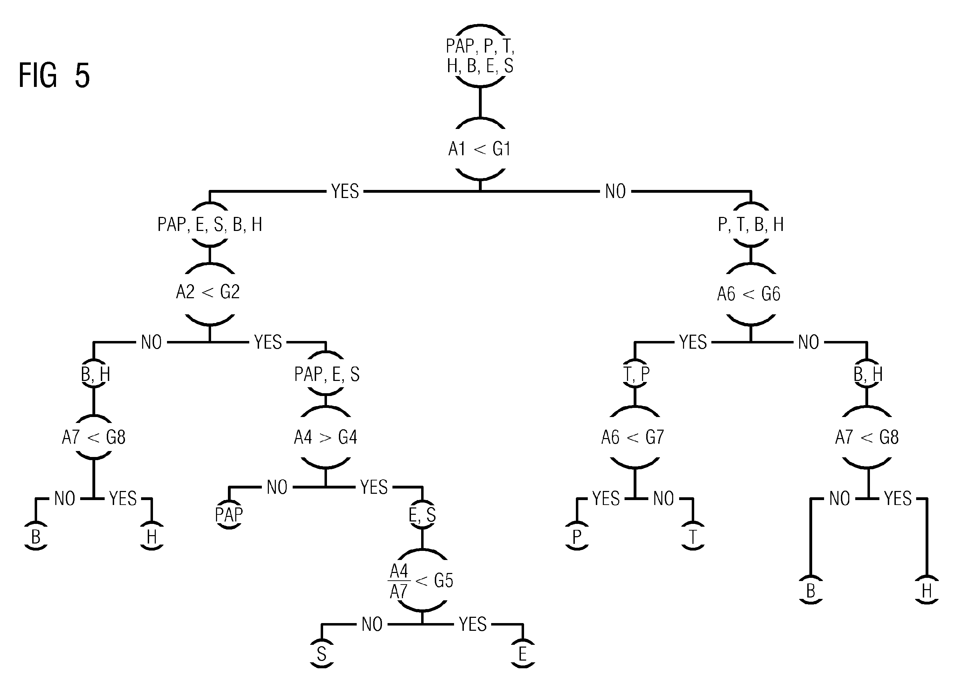

Fig. 5 zeigt eine schematische Darstellung eines Flussdiagramms gemäß einer bevorzugten Ausführungsform der Erfindung. Die gezeigte Ausführungsform unterscheidet sich von der in Fig. 1 gezeigten wie folgt.

Die erste Absorption A1 wird bei einer Wellenlänge, die 660 nm oder 800 nm beträgt, gemessen, die zweite Absorption A2 wird bei einer Wellenlänge, die 405 nm beträgt, gemessen, wobei die Messung der dritte Absorption A3, die Bildung des dritten Grenzwertes G3 und alle diesbezüglichen Bedingungen des Verfahrens entfallen, und wobei die vierte Absorption A4 bei einer Wellenlänge, die 405 nm beträgt, gemessen wird, und wobei die fünfte Absorption A5 durch die siebte Absorption A7 im gesamten Verfahren ersetzt wird, und wobei die sechste Absorption A6 bei einer Wellenlänge, die 405 nm oder 340 nm beträgt, gemessen wird, und wobei die siebte Absorption A7 bei einer Wellenlänge, die 575 nm beträgt, gemessen wird.

Der erste Grenzwert der Absorption G1 beträgt 0,23 A, der zweite Grenzwert der Absorption G2 1,4 A, der vierte Grenzwert der Absorption G4 1,1 A, der fünfte Grenzwert des Verhältnisses der Absorptionen G5 7,0 A, der sechste Grenzwert der Absorption G6 0,8426 ln(A1) + 2,4406 A, wobei hierbei A1 800 nm beträgt, oder 0,7354 ln(A1) + 2,5936, wobei hierbei A1 800 nm beträgt, der siebte Grenzwert der Absorption G7 -0,1193 (A1$^2$) + 1,0384 A1 + 1,1343 A, wobei hierbei A1 800 nm beträgt, oder -0,6466 ln(A1) + 2,3856 A wobei hierbei A1 800 nm beträgt, und/oder der achte Grenzwert der Absorption G8 0,6 A.

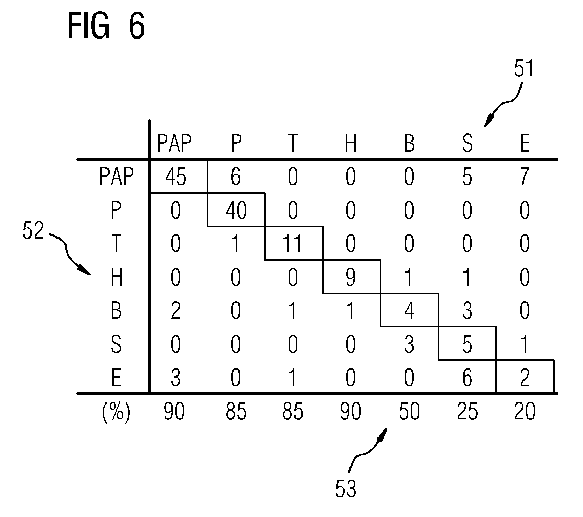

Fig. 6 zeigt eine tabellarische Zusammenfassung experimentell bestimmter Zuordnungen (52) von Körperflüssigkeitsproben zu Körperflüssigkeitsprobenklassen (51) gemäß der Ausführungsform der Erfindung in Fig. 5. Angegeben ist jeweils die Anzahl der Körperflüssigkeitsproben der entsprechenden Körperflüssigkeitsprobenklassen. Weiter ist der mittels des erfindungsgemäßen Verfahrens richtig erkannte Anteil (53) der Körperflüssigkeitsproben in Prozent (%) angegeben.

Die Probeneigenschaften sind identisch mit denen, die in Fig. 2 beschrieben sind.

Bezugszeichenliste

| | |
|---|---|
| 51 | Körperflüssigkeitsprobenklassen |
| 52 | Zuordnung |
| 53 | Anteil |
| PAP | (Citrat-) Plasma |
| P | plättchenreiches Plasma |
| T | lipämisches Plasma |
| H | Plasma mit Hämoglobin |
| B | Plasma mit Bilirubin |
| S | Serum |
| E | EDTA-Plasma |

## Patentansprüche

1. Verfahren zur Zuordnung einer Körperflüssigkeitsprobe zu einer Körperflüssigkeitsprobenklasse aus der Gruppe Citrat-Plasma (PAP), lipämisches Plasma oder Serum (T), plättchenreiches Plasma oder Serum (P), EDTA-Plasma (E), Serum (S), Plasma oder Serum mit Bilirubin (B), und Plasma oder Serum mit Hämoglobin (H), mit den Schritten:

   a) Durchstrahlen der Körperflüssigkeitsprobe mit Licht bei einer Vielzahl von Wellenlängen und
   b) Messung einer Vielzahl von Absorptionen der Körperflüssigkeitsprobe bei der Vielzahl von Wellenlängen; **gekennzeichnet durch** die Schritte:
   c) Messung einer ersten Absorption A1 der Körperflüssigkeitsprobe bei einer ersten Wellenlänge, die im Bereich zwischen 610 nm und 930 nm liegt,
   d) Messung einer zweiten Absorption A2 der Körperflüssigkeitsprobe bei einer zweiten Wellenlänge, die im Bereich zwischen 420 nm und 480 nm liegt,
   e) Messung einer dritten Absorption A3 der Körperflüssigkeitsprobe bei einer dritten Wellenlänge, die im Bereich zwischen 350 nm und 410 nm liegt,
   f) Messung einer vierten Absorption A4 der Körperflüssigkeitsprobe bei einer vierten Wellenlänge, die im Bereich zwischen 390 nm und 430 nm liegt,
   g) Messung einer fünften Absorption A5 der Körperflüssigkeitsprobe bei einer fünften Wellenlänge, die im Bereich zwischen 445nm und 485 nm liegt,
   h) Messung einer sechsten Absorption A6 der Körperflüssigkeitsprobe bei einer sechsten Wellenlänge, die im Bereich zwischen 320 nm und 400 nm liegt,
   i) Messung einer siebten Absorption A7 der Körperflüssigkeitsprobe bei einer siebten Wellenlänge, die im Bereich zwischen 350 nm und 650 nm liegt,
   j) Vergleich der ersten Absorption A1 mit einem vorbestimmten ersten Grenzwert G1 der Absorption,
   k) Vergleich der zweiten Absorption A2 mit einem vorbestimmten zweiten Grenzwert G2 der Absorption,
   l) Vergleich der dritten Absorption A3 mit einem vorbestimmten dritten Grenzwert G3 der Absorption,
   m) Vergleich der vierten Absorption A4 mit einem vorbestimmten vierten Grenzwert G4 der Absorption,
   n) Bildung eines ersten Verhältnisses der vierten Absorption A4 und der fünften Absorption A5 und Vergleich des ersten Verhältnisses mit einem vorbestimmten fünften Grenzwert G5 des Verhältnisses der Absorptionen,
   o) Bildung eines von der ersten Absorption A1 abhängigen sechsten Grenzwerts G6 der Absorption und Vergleich der sechsten Absorption A6 mit dem sechsten Grenzwert G6 der Absorption,
   p) Bildung eines von der ersten Absorption A1 abhängigen siebten Grenzwerts G7 der Absorption und Vergleich der sechsten Absorption A6 mit dem siebten Grenzwert G7 der Absorption,
   q) Bildung eines von der siebten Absorption A7 abhängigen achten Grenzwerts G8 der Absorption und Vergleich der fünften Absorption A5 mit dem achten Grenzwert G8 der Absorption,

r) Zuordnung der Körperflüssigkeitsprobe zu der Körperflüssigkeitsprobenklasse Citrat-Plasma (PAP), falls A1 kleiner G1 und A2 kleiner G2 und A3 kleiner G3 und A4 kleiner G4, oder

s) Zuordnung der Körperflüssigkeitsprobe zu der Körperflüssigkeitsprobenklasse EDTA-Plasma (E), falls A1 kleiner G1 und A2 kleiner G2 und A3 kleiner G3 und A4 größer G4 und das erste Verhältnis von A4 und A5 kleiner G5, oder

t) Zuordnung der Körperflüssigkeitsprobe zu der Körperflüssigkeitsprobenklasse Serum (S), falls A1 kleiner G1 und A2 kleiner G2 und A3 kleiner G3 und A4 größer G4 und das erste Verhältnis von A4 und A5 größer G5, oder

u) Zuordnung der Körperflüssigkeitsprobe zu der Körperflüssigkeitsprobenklasse plättchenreiches Plasma oder Serum (P), falls A1 größer G1 und A6 kleiner G6 und A6 kleiner G7, oder

v) Zuordnung der Körperflüssigkeitsprobe zu der Körperflüssigkeitsprobenklasse lipämisches Plasma oder Serum (T), falls A1 größer G1 und A6 kleiner G6 und A6 größer G7, oder

w) Zuordnung der Körperflüssigkeitsprobe zu der Körperflüssigkeitsprobenklasse Plasma oder Serum mit Hämoglobin (H), falls A1 größer G1 und A6 größer G6 und A5 kleiner G8, oder falls A1 kleiner G1 und A2 größer G2 und A5 kleiner G8, oder falls A1 kleiner G1 und A3 größer G3 und A5 kleiner G8, oder falls A1 kleiner G1 und A2 größer G2 und A3 größer G3 und A5 kleiner G8, oder

x) Zuordnung der Körperflüssigkeitsprobe zu der Körperflüssigkeitsprobenklasse Plasma oder Serum mit Bilirubin (B), falls A1 größer G1 und A6 größer G6 und A5 größer G8 ist, oder falls A1 kleiner G1 und A2 größer G2 und A5 größer G8, oder falls A1 kleiner G1 und A3 größer G3 und A5 größer G8, oder falls A1 kleiner G1 und A2 größer G2 und A3 größer G3 und A5 größer G8,

wobei die erste, zweite, dritte und vierte Wellenlänge voneinander verschieden sind.

2. Verfahren Anspruch 1, wobei die zweite und die fünfte, die dritte und die sechste sowie die vierte und die siebte Wellenlänge gleich sind.

3. Verfahren nach Anspruch 1, wobei die siebte Wellenlänge im Bereich zwischen 460 nm und 650 nm liegt.

4. Verfahren nach einem der Ansprüche 1 oder 3, wobei die erste, zweite, dritte, vierte, fünfte, sechste und siebte Wellenlänge voneinander verschieden sind.

5. Verfahren nach einem der Ansprüche 1 oder 4, wobei die erste Wellenlänge 850 nm, die zweite Wellenlänge 450 nm, die dritte Wellenlänge 380 nm, die vierte Wellenlänge 410 nm, die fünfte Wellenlänge 465 nm, die sechste Wellenlänge 340 nm und/oder die siebte Wellenlänge 550 nm beträgt.

6. Verfahren nach einem der Ansprüche 1 bis 3, wobei die erste Wellenlänge 645 nm, die zweite Wellenlänge 470 nm, die dritte Wellenlänge 365 nm, die vierte Wellenlänge 415 nm, die fünfte Wellenlänge 470 nm, die sechste Wellenlänge 365 nm und/oder die siebte Wellenlänge 415 nm beträgt.

7. Verfahren nach Anspruch 5, wobei der erste Grenzwert der Absorption G1 0,15 A, der zweite Grenzwert der Absorption G2 1,4 A, der dritte Grenzwert der Absorption G3 1,2 A, der vierte Grenzwert der Absorption G4 1,1 A, der fünfte Grenzwert des Verhältnisses der Absorptionen G5 1,1, der sechste Grenzwert der Absorption G6 0,7016 ln(A1) + 2,7 A, der siebte Grenzwert der Absorption G7 0,5908 ln(A1) + 2,3509 A, und der achte Grenzwert der Absorption G8 0,96 A7 + 1,1 A beträgt.

8. Verfahren nach Anspruch 6, wobei der erste Grenzwert der Absorption G1 0,23 A, der zweite Grenzwert der Absorption G2 1,4 A, der dritte Grenzwert der Absorption G3 1,2 A, der vierte Grenzwert der Absorption G4 1,1 A, der fünfte Grenzwert des Verhältnisses der Absorptionen G5 1,2, der sechste Grenzwert der Absorption G6 0,8935 ln(A1) + 2,2804 A, der siebte Grenzwert der Absorption G7 -0,1271 (A1$^2$) + 1,0857 A1 + 1,0244 A und der achte Grenzwert der Absorption G8 0,82 A7 + 0,13 A beträgt.

9. Verfahren nach Anspruch 1, wobei

die ersten Absorption A1 bei einer Wellenlänge, die im Bereich zwischen 610 nm und 930 nm liegt und bevorzugt 660 nm oder 800 nm beträgt, gemessen wird,

und wobei die zweite Absorption A2 bei einer Wellenlänge, die im Bereich zwischen 300 nm und 430 nm liegt und bevorzugt 405 nm beträgt, gemessen wird,

und wobei die Messung der dritte Absorption A3, die Bildung des dritten Grenzwertes G3 und alle diesbezüglichen Bedingungen des Verfahrens entfallen,

und wobei die vierte Absorption A4 bei einer Wellenlänge, die im Bereich zwischen 300 nm und 430 nm liegt und bevorzugt 405 nm beträgt, gemessen wird,

und wobei die fünfte Absorption A5 durch die siebte Absorption A7 im gesamten Verfahren ersetzt wird,

und wobei die sechste Absorption A6 bei einer Wellenlänge, die im Bereich zwischen 300 nm und 430 nm liegt und bevorzugt 405 nm oder 340 nm beträgt, gemessen wird,

und wobei die siebte Absorption A7 bei einer Wellenlänge, die im Bereich zwischen 350 nm und 650 nm liegt und bevorzugt 575 nm beträgt, gemessen wird.

10. Verfahren nach Anspruch 9, wobei der erste Grenzwert der Absorption G1 0,23 A, der zweite Grenzwert der Absorption G2 1,4 A, der vierte Grenzwert der Absorption G4 1,1 A, der fünfte Grenzwert des Verhältnisses der Absorptionen G5 7,0, der sechste Grenzwert der Absorption G6 $0,8426\ ln(A1) + 2,4406$ A oder $0,7354\ ln(A1) + 2,5936$, der siebte Grenzwert der Absorption G7 $-0,1193\ (A1^2) + 1,0384\ A1 + 1,1343$ A oder $-0,6466\ ln(A1) + 2,3856$ A beträgt, und/oder der achte Grenzwert der Absorption G8 0,6 A beträgt.

11. Verfahren nach einem der vorhergehenden Ansprüche, wobei das Durchstrahlen der Körperflüssigkeitsprobe mithilfe von mindestens einer, bevorzugt zwei bis 10, besonders bevorzugt vier bis sechs Laser- oder Leuchtdioden und das Erfassen der Vielzahl von Absorptionen (A1; A2; A2; A4; A5; A6; A7) mithilfe mindestens eines photometrischen Sensors erfolgt.

12. System zur Zuordnung einer Körperflüssigkeitsprobe zu einer Körperflüssigkeitsprobenklasse aus der Gruppe Citrat-Plasma (PAP), lipämisches Plasma oder Serum (T), plättchenreiches Plasma oder Serum (P), EDTA-Plasma (E), Serum (S), Plasma oder Serum mit Bilirubin (B), und Plasma oder Serum mit Hämoglobin (H), mit:

I) einer Messeinrichtung, welche dazu ausgelegt ist, eine Körperflüssigkeitsprobe mit Lichtstrahlen mit einer Vielzahl von Wellenlängen zu durchstrahlen und Messung einer Vielzahl von Absorptionen der Körperflüssigkeitsprobe bei der Vielzahl von Wellenlängen durchzuführen, wobei

die Messung einer ersten Absorption A1 der Körperflüssigkeitsprobe bei einer ersten Wellenlänge, die im Bereich zwischen 610 nm und 930 nm liegt,

die Messung einer zweiten Absorption A2 der Körperflüssigkeitsprobe bei einer zweiten Wellenlänge, die im Bereich zwischen 420 nm und 480 nm liegt,

die Messung einer dritten Absorption A3 der Körperflüssigkeitsprobe bei einer dritten Wellenlänge, die im Bereich zwischen 350 nm und 410 nm liegt,

die Messung einer vierten Absorption A4 der Körperflüssigkeitsprobe bei einer vierten Wellenlänge, die im Bereich zwischen 390 nm und 430 nm liegt,

die Messung einer fünften Absorption A5 der Körperflüssigkeitsprobe bei einer fünften Wellenlänge, die im Bereich zwischen 445 nm und 485 nm liegt,

die Messung einer sechsten Absorption A6 der Körperflüssigkeitsprobe bei einer sechsten Wellenlänge, die im Bereich zwischen 320 nm und 400 nm liegt,

die Messung einer siebten Absorption A7 der Körperflüssigkeitsprobe bei einer siebten Wellenlänge, die im Bereich zwischen 350 nm und 650 nm liegt, erfolgt, und

II) einer Berechnungseinrichtung, welche dazu ausgelegt ist, die erste Absorption A1 mit einem vorbestimmten ersten Grenzwert G1 der Absorption, die zweite Absorption A2 mit einem vorbestimmten zweiten Grenzwert G2 der Absorption,

die dritte Absorption A3 mit einem vorbestimmten dritten Grenzwert G3 der Absorption und

die vierte Absorption A4 mit einem vorbestimmten vierten Grenzwert G4 der Absorption zu vergleichen, und

III) einer Berechnungseinrichtung, welche dazu ausgelegt ist, ein erstes Verhältnis der vierten Absorption A4 und der fünften Absorption A5 zu bilden und das erste Verhältnis mit einem vorbestimmten fünften Grenzwert G5 des Verhältnisses der Absorptionen zu vergleichen, und

IV) einer Berechnungseinrichtung, welche dazu ausgelegt ist, einen von der ersten Absorption A1 abhängigen sechsten Grenzwert G6 der Absorption zu bilden und die sechste Absorption A6 mit dem sechsten Grenzwert G6 der Absorption zu vergleichen, und einen von der ersten Absorption A1 abhängigen siebten Grenzwert G7 der Absorption zu bilden und die sechste Absorption A6 mit dem siebten Grenzwert G7 der Absorption zu vergleichen, und

einen von der siebten Absorption A7 abhängigen achten Grenzwert G8 der Absorption zu bilden und die fünften Absorption A5 mit dem achten Grenzwert G8 der Absorption zu vergleichen, und

V) einer Berechnungseinrichtung, welche dazu ausgelegt ist, die Körperflüssigkeitsprobe zu der Körperflüssigkeitsprobenklasse Citrat-Plasma (PAP) zuzuordnen, falls A1 kleiner G1 und A2 kleiner G2 und A3 kleiner G3 und A4 kleiner G4, oder

die Körperflüssigkeitsprobe zu der Körperflüssigkeitsprobenklasse EDTA-Plasma (E) zuzuordnen, falls A1 kleiner G1 und A2 kleiner G2 und A3 kleiner G3 und A4 größer G4 und das erste Verhältnis von A4 und A5 kleiner G5, oder

die Körperflüssigkeitsprobe zu der Körperflüssigkeitsprobenklasse Serum (S) zuzuordnen, falls A1 kleiner G1 und A2 kleiner G2 und A3 kleiner G3 und A4 größer G4 und das erste Verhältnis von A4 und A5 größer G5, oder die Körperflüssigkeitsprobe zu der Körperflüssigkeitsprobenklasse plättchenreiches Plasma oder Serum (P) zuzuordnen, falls A1 größer G1 und A6 kleiner G6 und A6 kleiner G7, oder

die Körperflüssigkeitsprobe zu der Körperflüssigkeitsprobenklasse lipämisches Plasma oder Serum (T) zuzuordnen, falls A1 größer G1 und A6 kleiner G6 und A6 größer G7, oder

die Körperflüssigkeitsprobe zu der Körperflüssigkeitsprobenklasse Plasma oder Serum mit Bilirubin (B) zuzuordnen, falls A1 größer G1 und A6 größer G6 und A5 größer G8 ist, oder falls A1 kleiner G1 und A2 größer G2 und A5 größer G8, oder falls A1 kleiner G1 und A3 größer G3 und A5 größer G8, oder falls A1 kleiner G1 und A2 größer G2 und A3 größer G3 und A5 größer G8, oder

die Körperflüssigkeitsprobe zu der Körperflüssigkeitsprobenklasse Plasma oder Serum mit Hämoglobin (H) zuzuordnen, falls A1 größer G1 und A6 größer G6 und A5 kleiner G8, oder falls A1 kleiner G1 und A2 größer G2 und A5 kleiner G8, oder falls A1 kleiner G1 und A3 größer G3 und A5 kleiner G8, oder falls A1 kleiner G1 und A2 größer G2 und A3 größer G3 und A5 kleiner G8,

wobei die erste, zweite, dritte und vierte, Wellenlänge voneinander verschieden sind.

13. System nach Anspruch 12, wobei die zweite und die fünfte, die dritte und die sechste sowie die vierte und die siebte Wellenlänge gleich sind.

14. System nach einem der Ansprüche 12 oder 13,wobei die erste Wellenlänge 645 nm, die zweite Wellenlänge 470 nm, die dritte Wellenlänge 365 nm, die vierte Wellenlänge 415 nm, die fünfte Wellenlänge 470 nm, die sechste Wellenlänge 365 nm und/oder die siebte Wellenlänge 415 nm beträgt.

15. System nach Anspruch 14, wobei der erste Grenzwert der Absorption G1 0,23 A, der zweite Grenzwert der Absorption G2 1,4 A, der dritte Grenzwert der Absorption G3 1,2 A, der vierte Grenzwert der Absorption G4 1,1 A, der fünfte Grenzwert des Verhältnisses der Absorptionen G5 1,2, der sechste Grenzwert der Absorption G6 $0{,}8935 \ln(A1) + 2{,}2804$ A, der siebte Grenzwert der Absorption G7 $-0{,}1271 (A1^2) + 1{,}0857 A1 + 1{,}0244$ A und/oder der achte Grenzwert der Absorption G8 $0{,}82 A7 + 0{,}13$ A beträgt.

16. Automatischer Analysator umfassend ein System nach einem der Ansprüche 12 bis 15.

FIG 1

EP 3 296 720 A1

## FIG 2

|     | PAP | P  | T | H   | B | S | E |
| --- | --- | -- | - | --- | - | - | - |
| PAP | 40  | 2  | 0 | 0   | 0 | 3 | 5 |
| P   | 0   | 44 | 1 | 0   | 0 | 0 | 0 |
| T   | 0   | 0  | 9 | 0   | 0 | 0 | 0 |
| H   | 5   | 0  | 2 | 10  | 1 | 3 | 1 |
| B   | 1   | 1  | 1 | 0   | 5 | 1 | 1 |
| S   | 0   | 0  | 0 | 0   | 0 | 9 | 0 |
| E   | 4   | 0  | 0 | 0   | 2 | 4 | 3 |
| (%) | 80  | 94 | 69| 100 | 63| 45| 30|

51

52

53

# FIG 3

EP 3 296 720 A1

## FIG 4

|      | PAP | P  | T  | H   | B   | S  | E  |
|------|-----|----|----|-----|-----|----|----|
| PAP  | 42  | 0  | 0  | 0   | 0   | 3  | 5  |
| P    | 0   | 46 | 0  | 0   | 0   | 0  | 0  |
| T    | 2   | 1  | 11 | 0   | 0   | 0  | 0  |
| H    | 2   | 0  | 1  | 10  | 0   | 0  | 1  |
| B    | 3   | 0  | 0  | 0   | 8   | 2  | 1  |
| S    | 0   | 0  | 1  | 0   | 0   | 12 | 0  |
| E    | 1   | 0  | 0  | 0   | 0   | 3  | 3  |
| (%)  | 84  | 98 | 85 | 100 | 100 | 60 | 30 |

FIG 5

EP 3 296 720 A1

## FIG 6

| | PAP | P | T | H | B | S | E |
|---|---|---|---|---|---|---|---|
| PAP | 45 | 6 | 0 | 0 | 0 | 5 | 7 |
| P | 0 | 40 | 0 | 0 | 0 | 0 | 0 |
| T | 0 | 1 | 11 | 0 | 0 | 0 | 0 |
| H | 0 | 0 | 0 | 9 | 1 | 1 | 0 |
| B | 2 | 0 | 1 | 1 | 4 | 3 | 0 |
| S | 0 | 0 | 0 | 0 | 3 | 5 | 1 |
| E | 3 | 0 | 1 | 0 | 0 | 6 | 2 |
| (%) | 90 | 85 | 85 | 90 | 50 | 25 | 20 |

51

52

53

Europäisches
Patentamt

European
Patent Office

Office européen
des brevets

**EUROPÄISCHER RECHERCHENBERICHT**

Nummer der Anmeldung

EP 16 18 8799

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 2 549 264 A1 (SIEMENS HEALTHCARE DIAGNOSTICS [DE]) 23. Januar 2013 (2013-01-23) * Zusammenfassung * * Absätze [0036] - [0056] * ----- | 1-16 | INV. G01N21/31 G01N33/49 |
| A | WO 2013/184625 A2 (SIEMENS HEALTHCARE DIAGNOSTICS [US]; BABSON ARTHUR [US]) 12. Dezember 2013 (2013-12-12) * Zusammenfassung * ----- | 1-16 | |
| A | EP 2 910 926 A1 (HOFFMANN LA ROCHE [CH]; ROCHE DIAGNOSTICS GMBH [DE]) 26. August 2015 (2015-08-26) * Zusammenfassung * * Absätze [0004] - [0035] * ----- | 1-16 | |
| A | EP 3 051 271 A1 (SIEMENS HEALTHCARE DIAGNOSTICS [DE]) 3. August 2016 (2016-08-03) * Zusammenfassung * ----- | 1-16 | |
| A | EP 2 557 413 A2 (SONY CORP [JP]; UNIV KYOTO [JP]) 13. Februar 2013 (2013-02-13) * Zusammenfassung * * Absätze [0021] - [0029] * ----- | 1-16 | RECHERCHIERTE SACHGEBIETE (IPC) G01N |
| A | EP 1 845 363 A2 (SYSMEX CORP [JP]) 17. Oktober 2007 (2007-10-17) * das ganze Dokument * ----- | 1-16 | |

Der vorliegende Recherchenbericht wurde für alle Patentansprüche erstellt

| Recherchenort | Abschlußdatum der Recherche | Prüfer |
|---|---|---|
| München | 17. März 2017 | Meacher, David |

## ANHANG ZUM EUROPÄISCHEN RECHERCHENBERICHT
## ÜBER DIE EUROPÄISCHE PATENTANMELDUNG NR.

EP 16 18 8799

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-03-2017

| Im Recherchenbericht angeführtes Patentdokument | Datum der Veröffentlichung | Mitglied(er) der Patentfamilie | Datum der Veröffentlichung |
|---|---|---|---|
| EP 2549264 A1 | 23-01-2013 | CN 103649721 A<br>EP 2549264 A1<br>EP 2710348 A1<br>JP 2014521095 A<br>US 2014192342 A1<br>WO 2013010970 A1 | 19-03-2014<br>23-01-2013<br>26-03-2014<br>25-08-2014<br>10-07-2014<br>24-01-2013 |
| WO 2013184625 A2 | 12-12-2013 | EP 2856110 A2<br>US 2015168371 A1<br>WO 2013184625 A2 | 08-04-2015<br>18-06-2015<br>12-12-2013 |
| EP 2910926 A1 | 26-08-2015 | CN 105980833 A<br>EP 2910926 A1<br>EP 3108220 A1<br>JP 2017506342 A<br>US 2016349237 A1<br>WO 2015124512 A1 | 28-09-2016<br>26-08-2015<br>28-12-2016<br>02-03-2017<br>01-12-2016<br>27-08-2015 |
| EP 3051271 A1 | 03-08-2016 | CN 105823739 A<br>EP 3051271 A1<br>EP 3051272 A2<br>JP 2016138886 A<br>US 2016216249 A1 | 03-08-2016<br>03-08-2016<br>03-08-2016<br>04-08-2016<br>28-07-2016 |
| EP 2557413 A2 | 13-02-2013 | CN 102928360 A<br>EP 2557413 A2<br>JP 5959814 B2<br>JP 2013036832 A<br>US 2013038860 A1 | 13-02-2013<br>13-02-2013<br>02-08-2016<br>21-02-2013<br>14-02-2013 |
| EP 1845363 A2 | 17-10-2007 | EP 1845363 A2<br>EP 2645086 A2<br>ES 2493629 T3<br>US 2007222973 A1 | 17-10-2007<br>02-10-2013<br>12-09-2014<br>27-09-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2549264 A1